# EUROPEAN PATENT APPLICATION

(11) **EP 4 261 925 A1**
(43) Date of publication of application: **18.10.2023**
(21) Application number: 22275160.4
(22) Date of filing: 15.12.2022
(51) Int. Cl.: H01M 4/13, H01M 4/66, H01M 4/80

(54) **CURRENT COLLECTOR HAVING PORE-FORMING FUNCTIONAL COATING LAYER, ELECTRODE SHEET AND BATTERY**

(30) Priority: 12.04.2022 CN 202210377143
(71) Applicant: REPT BATTERO Energy Co., Ltd., Wenzhou, Zhejiang 325024 (CN); Shanghai Ruipu Energy Co., Ltd., Shanghai 201206 (CN)
(72) Inventor: CAO,, Hui, Wenzhou, Zhejiang, 325024 (CN); YAO,, Yi, Shanghai, 201206 (CN); HOU,, Min, Shanghai, 201206 (CN); LIU,, Chan, Shanghai, 201206 (CN); GUO,, Yingying, Shanghai, 201206 (CN); YANG,, Yaqing, Shanghai, 201206 (CN)
(74) Representative: Potter Clarkson

(57) **Abstract**

The present disclosure provides a current collector having a pore-forming functional coating layer, an electrode sheet and a battery. The current collector having a pore-forming functional coating layer according to the present disclosure comprises an electrically conductive substrate layer and a functional coating layer applied on at least one surface of the substrate layer, wherein the functional coating layer comprises a gas-generating compound which has a decomposition temperature of 250°C or less and is capable of producing gas. A compound capable of generating gas by decomposition is applied in the functional layer of the current collector according to the present disclosure. Hence, through holes extending through the coating layer can be produced by decomposing the pore-forming compound at the bottom of the active coating layer to generate gas with no need to change the existing coating process, thereby improving the kinetic performance of battery products. The method is simple, practicable, cost efficient, suitable for popularization, and has high application value.

## Description

### Technical Field

The present disclosure relates to the technical field of manufacturing batteries, in particular to a current collector having a pore-forming functional coating layer, an electrode sheet and a battery.

### Background Art

Lithium-ion batteries have become one of the choices that are most widely used for energy storage and power battery applications due to the high energy density and long service life thereof. In order to obtain higher energy efficiency and reduce the cost for manufacturing batteries, it is usually desirable to increase the mass proportion of active materials and reduce the amount of auxiliary materials used in the design of lithium-ion batteries. However, when a larger amount of an active material is coated, the thickness of the coating layer will increase inevitably. As a result, the diffusion path of lithium ions in the battery becomes longer, and the performance of the material close to the current collector is suppressed. Ultimately, the kinetic performance of the battery such as rate charge/discharge capacity retention will be affected due to sluggish lithium ion transfer. This runs counter to the requirements of users for fast charging and high power of batteries.

To address this problem, it is considerable to optimize the pore structure of the electrode sheet in the battery. Diffusion paths of electrolyte and lithium ions can be built by constructing through holes extending through the active material coating layer. This helps to improve the kinetic performance of the thick coated cell.

According to Chinese Patent No. CN110957470B, a pore forming agent is added to the battery active material slurry to prepare a lithium ion battery electrode sheet comprising an active coating layer having a porous structure. The content of the pore forming agent in the slurry is 10%-30% of the total solid content. Such a high proportion of the pore-forming agent will form a large quantity of holes in the coating layer. Although it is possible to promote the kinetic performance of the battery, it is also possible that pits occur on the film surface, and the active material is not distributed evenly. In turn, due to uneven lithium intercalation, problems such as black spots and lithium plating will arise in the long-term cycle of the battery. Furthermore, because the pore-forming agent decomposes randomly in the wet film formed from the slurry, it is likely that a portion of the pore-forming agent decomposes directly on the surface of the slurry, which leads to waste. CN102655229A proposes a method for manufacturing an electrode sheet including through holes, wherein a pore-forming agent is dissolved, then precipitated, then pressed into the active material coating layer, and then decomposed in a later stage by heating. However, the depth of the pore channels generated by this method depends on the grain size and orientation of the precipitated pore-forming agent. The grain size and orientation are characterized by strong randomness, such that it cannot be ensured that the channels will extend to the bottom of the active material coating layer. WO2021138814A1 proposes a method for making through holes in an electrode sheet using a gravure roller. According to this method, an uncoated area of the current collector is formed during the coating process. However, in actual implementation, it is possible that the uncoated area is covered by a liquid film due to the surface tension of the slurry, thereby forming close-ended holes. In addition, this method requires modification to the equipment and the use of gravure rollers, so the cost is high.

### Summary

In allusion to the deficiencies in the prior art, the object of the present disclosure is to provide a current collector having a pore-forming functional coating layer, an electrode sheet and a battery.

The object of the present disclosure is fulfilled by the following technical solutions:
In a first aspect according to the present disclosure, there is provided a current collector having a pore-forming functional coating layer, comprising an electrically conductive substrate layer and a functional coating layer applied on at least one surface of the substrate layer, wherein the functional coating layer comprises a gas-generating compound which has a decomposition temperature of 250°C or less and is capable of producing gas. As compared to the prior art in which a gas-generating compound is dispersed in an active material coating slurry, pre-distribution of the gas-generating compound on the current collector enables a reduced amount of the gas-generating compound to be used, and ensures that the gas-generating compound only decomposes on the surface of the current collector or at the lower part of the coating slurry. There will be no decomposition of the gas-generating compound on the surface of the coated wet film. In addition, the use of the gas-generating compound in a reduced amount can reduce generation of corrosive gases such as ammonia, so the drying equipment and operators will be less affected. Unlike an electrode sheet comprising a positive electrode active material or a negative electrode active material, the current collector according to the present disclosure is free of a positive electrode active material and a negative electrode active material.

According to the present disclosure, the gas-generating compound decomposes to form bubbles during drying the positive electrode slurry or negative electrode slurry applied on the current collector having a pore-forming functional coating layer, thereby building through holes extending from bottom to top through the active material coating layer formed by drying the positive electrode slurry or negative electrode slurry.

In some embodiments, the gas-generating compound is pre-distributed on the current collector, and decomposes to form bubbles during drying the coating on the battery electrode sheet, thereby building through holes extending from bottom to top through the active material coating layer.

Preferably, the electrically conductive substrate layer comprises a copper foil, an aluminum foil, or a polymer foil with a metal plating layer adhered to a surface thereof. In some embodiments, the electrically conductive substrate layer is selected from a copper foil, an aluminum foil, or a polymer foil with a metal plating layer adhered to a surface thereof.

Preferably, the compound having a decomposition temperature of 250°C or less and capable of generating gas (i.e. the gas-generating compound) includes one or more of ammonium bicarbonate, ammonium carbonate, ammonium oxalate, and ammonium bioxalate. In some embodiments, the gas-generating compound is one or more selected from the group consisting of ammonium bicarbonate, ammonium carbonate, ammonium oxalate, and ammonium binoxalate.

Preferably, the functional coating layer is free of a positive electrode active material and a negative electrode active material.

In some embodiments, the functional coating layer further comprises one or more selected from the group consisting of an electrically conductive agent and a binder.

In some embodiments, the functional coating layer consists of a gas-generating compound and optionally one or more selected from the group consisting of an electrically conductive agent and a binder.

In some embodiments, the functional coating layer comprises a gas-generating compound, an electrically conductive agent and a binder.

Preferably, in the functional coating layer, a coating amount D (i.e. areal density) of the gas-generating compound per unit area of the current collector satisfies: 0<D<60g/m². As used herein, when the functional coating layer is applied to both surfaces of the electrically conductive substrate layer, the coating amount D in the present disclosure is a total coating amount of the gas-generating compound in the two functional coating layers per unit area of the current collector.

Preferably, in the functional coating layer, the coating amount D of the gas-generating compound per unit area of the current collector satisfies: 0<D<35g/m².

Preferably, in the functional coating layer, the coating amount D of the gas-generating compound per unit area of the current collector satisfies: 10≤D≤35g/m².

Preferably, in the functional coating layer, the coating amount D of the gas-generating compound per unit area of the current collector satisfies: 20≤D≤35g/m².

In some embodiments, the electrically conductive agent includes one or more of activated carbon, carbon black, graphite, carbon nanotubes, and carbon fibers.

In some embodiments, the binder is a polymer binder. The polymer binder suitable for the present disclosure includes one or more of polyvinylidene fluoride, polymethyl acrylate, styrene-butadiene rubber, sodium carboxymethyl cellulose, lithium carboxymethyl cellulose, polyvinyl alcohol and polyurethane.

Preferably, in the functional coating layer, the coating amount D1 (i.e. areal density) of the electrically conductive agent per unit area of the current collector satisfies: 0<D1≤2g/m². For example, D1 may be 0.1g/m², 0.2g/m², 0.5g/m² or 1g/m².

Preferably, in the functional coating layer, the coating amount D (i.e. areal density) of the binder per unit area of the current collector satisfies: 0<D2≤2 g/m². For example, D2 may be 0.1g/m², 0.2g/m², 0.5g/m² or 1g/m².

In a second aspect according to the present disclosure, there is provided a method for preparing a current collector having a pore-forming functional coating layer, comprising the following steps: dissolving and dispersing a gas-generating compound, a binder (optional) and an electrically conductive agent (optional) in a solvent to form a functional coating slurry; using a coating machine to transfer the slurry to at least one surface of an electrically conductive substrate layer; and then drying the coating to form a current collector having a functional coating layer, wherein after the drying, an areal density of the gas-generating compound is 0< D≤60g/m².

In a third aspect according to the present disclosure, there is provided an electrode sheet for a battery, wherein the electrode sheet is prepared using the current collector having a pore-forming functional coating layer according to any embodiment described herein.

In a fourth aspect according to the present disclosure, there is provided a method for preparing an electrode sheet for a battery, wherein the method includes the following steps:
(1) applying a positive electrode slurry or negative electrode slurry to a surface of the functional coating layer of the current collector having a pore-forming functional coating layer according to any embodiment in the present disclosure;
(2) drying the current collector coated with the positive electrode slurry or negative electrode slurry such that the gas-generating compound in the functional coating layer decomposes to form bubbles during the drying, thereby building through holes extending from bottom to top through an active material coating layer formed by drying the positive electrode slurry or negative electrode slurry.

In some embodiments, in step (2), decomposition of the gas-generating compound in the functional coating layer to form bubbles during the drying is enabled by controlling drying temperature.

In a fifth aspect according to the present disclosure, there is provided a battery comprising the electrode sheet for a battery according to any embodiment described herein. The battery may be a lithium ion battery.

The present disclosure has the following beneficial effects in comparison with the prior art:
1. A compound capable of generating gas by decomposition is applied in the functional layer of the current collector according to the present disclosure. Hence, through holes extending through the active material coating layer can be produced by decomposing the pore-forming compound at the bottom of the active coating layer to generate gas with no need to change the existing coating process, thereby improving the kinetic performance of battery products. The existence of the through holes enables optimization of the pore structure in the battery electrode sheet, so that it shows better capacity performance and rate performance at the same compact density. The method is simple, practicable, cost efficient, suitable for popularization, and has high application value.
2. As compared to the prior art in which a gas-generating compound is dispersed in an active material coating slurry, pre-distribution of the gas-generating compound on the current collector according to the present disclosure enables a reduced amount of the gas-generating compound to be used, and ensures that the gas-generating compound only decomposes on the surface of the current collector or at the lower part of the active material coating layer. There will be no decomposition of the gas-generating compound on the surface of the coated wet film. In addition, the use of the gas-generating compound in a reduced amount can reduce generation of corrosive gases such as ammonia, so the drying equipment and operators will be less affected.
3. A binder and an electrically conductive agent may also be added to the functional coating layer of the current collector according to the present disclosure to further enhance the adhesion between the current collector and the active material coating layer and promote electron conduction. In cooperation with the through holes generated from the gas-generating compound, the cycling stability and power performance of the battery can be further improved during use.

### Detailed Description

The present disclosure will be illustrated in detail with reference to the following specific Examples. The following Examples will help those skilled in the art to further understand the present disclosure, but do not limit the present disclosure in any way. It should be noted that, for those skilled in the art, variations and modifications can be made without departing from the concept of the present disclosure. They all fall in the protection scope of the present disclosure.

The surface of the current collector for a lithium ion battery according to the present disclosure contains a compound that can decompose to generate gas at low temperature (lower than 250°C). The compound can decompose to form bubbles during drying the coating of the battery electrode sheet, thereby building through holes extending from bottom to top through the active material coating layer. These through holes can act as diffusion channels for lithium ions in the electrolyte to reduce the resistance to diffusion of the surface lithium ions of the active material in the active coating layer near the surface of the current collector, thereby achieving the effect of improving the overall kinetic performance of the battery. The existence of the through holes enables optimization of the pore structure in the lithium ion battery electrode sheet, so that it shows better capacity performance and rate performance at the same compact density.

The electrically conductive substrate in the current collector may be a conventional choice in the prior art. A useful electrically conductive substrate includes one or more selected from the group consisting of metal foils (e.g. a copper foil, an aluminum foil) and composite foils (e.g. a polymer foil with a metal plating layer adhered to a surface thereof). In some embodiments, the electrically conductive substrate includes an aluminum foil for a positive electrode, a copper foil for a negative electrode, or a composite current collector comprising a polymer substrate with a metal plating layer may also be used.

Preferably, the gas-generating compound may be one or more selected from the group consisting of ammonium bicarbonate, ammonium carbonate, ammonium oxalate, and ammonium bioxalate. The decomposition temperatures of these compounds are equal to or higher than room temperature and lower than or equal to 250°C, so as to ensure that the compounds will not decompose during preparation of the current collector, nor will the temperatures be higher than the oxidation temperature of the electrically conductive substrate (e.g. a metal or composite foil) in air.

In those embodiments where the pore-forming agent (the gas-generating compound) is an ammonium-ion-containing compound, ammonia gas is generated during the high-temperature drying process. As a corrosive gas, ammonia can cause damage to the lithium battery production equipment during use. Application of a relatively small amount of a pore-forming agent to the current collector is beneficial to construction of through holes and promotion of the kinetic performance of the battery at a lower amount of the pore-forming agent on the one hand. On the other hand, it enables reduced generation of ammonia gas, reduced corrosion of the equipment, and a longer service life of the equipment, thereby reducing additional cost caused by equipment damage in the production process.

A binder and an electrically conductive agent may also be added to the functional coating layer of the current collector according to the present disclosure to further enhance the adhesion between the current collector and the active material coating layer and promote electron conduction. In cooperation with the through holes generated from the gas-generating compound, the cycling stability and power performance of the battery can be further improved during use.

According to the present disclosure, the positive electrode slurry and negative electrode slurry refer to active material coating slurries comprising a positive electrode active material and a negative electrode active material respectively, used for forming a positive electrode active material coating layer and a negative electrode active material coating layer. Unlike the prior art in which a gas-generating compound is dispersed in an active material coating slurry, the functional coating layer of the current collector and the functional coating slurry used for forming the functional coating layer according to the present disclosure do not contain a positive electrode active material or a negative electrode active material. The definitions of positive electrode active material and negative electrode active material are well known to those skilled in the art.

Next, the technical solution according to the present disclosure will be further described in detail with reference to specific examples.

### Example 1

Ammonium bicarbonate was dissolved and dispersed in N-methyl pyrrolidone (NMP) to form a functional coating slurry having a solid content (i.e. mass concentration) of 10%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium bicarbonate was 35g/m².

### Example 2

Ammonium bicarbonate was dissolved and dispersed in deionized water to form a functional coating slurry having a solid content of 10%. A coating machine was used to transfer the slurry to the surface of a copper foil, and then the coating was dried at 30°C to form a current collector having a functional coating layer. The functional coating slurry was applied to both sides of the foil. After the coating was dried, the areal density of ammonium bicarbonate was 20g/m².

### Example 3

Ammonium bicarbonate and polyvinylidene fluoride (PVDF) at a mass ratio of 100:1 were dissolved and dispersed in NMP to form a functional coating slurry having a solid content of 10.1%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium bicarbonate was 35g/m², and the areal density of PVDF was 0.35g/m².

### Example 4

Ammonium bicarbonate and sodium carboxymethyl cellulose (CMC-Na) at a mass ratio of 100:1 were dissolved and dispersed in deionized water to form a functional coating slurry having a solid content of 10.1%. A coating machine was used to transfer the slurry to the surface of a copper foil, and then the coating was dried at 30°C to form a current collector having a functional coating layer. The functional coating slurry was applied to both sides of the foil. After the coating was dried, the areal density of ammonium bicarbonate was 20g/m², and the areal density of CMC was 0.2g/m².

### Example 5

Ammonium bicarbonate and CMC-Na at a mass ratio of 20:1 were dissolved and dispersed in deionized water to form a functional coating slurry having a solid content of 2.1%. A coating machine was used to transfer the slurry to the surface of a copper foil, and then the coating was dried at 30°C to form a current collector having a functional coating layer. The functional coating slurry was applied to both sides of the foil. After the coating was dried, the areal density of ammonium bicarbonate was 10g/m², and the areal density of CMC was 0.5g/m².

### Example 6

Ammonium bicarbonate, PVDF and carbon black at a mass ratio of 100:1:1 were dissolved and dispersed in NMP to form a functional coating slurry having a solid content of 10.2%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium bicarbonate was 50g/m², the areal density of PVDF was 0.5g/m², and the areal density of carbon black was 0.5g/m².

### Example 7

Ammonium carbonate, PVDF and carbon black at a mass ratio of 100:1:1 were dissolved and dispersed in NMP to form a functional coating slurry having a solid content of 10.2%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium carbonate was 35g/m², the areal density of PVDF was 0.35g/m², and the areal density of carbon black was 0.35g/m².

### Example 8

Ammonium bioxalate, PVDF and carbon black at a mass ratio of 100:1:1 were dissolved and dispersed in NMP to form a functional coating slurry having a solid content of 10.2%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium bioxalate was 35g/m², the areal density of PVDF was 0.35g/m², and the areal density of carbon black was 0.35g/m².

### Example 9

Ammonium oxalate and PVDF at a mass ratio of 100:1 were dissolved and dispersed in NMP to form a functional coating slurry having a solid content of 10.1%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium oxalate was 35g/m², and the areal density of PVDF was 0.35g/m².

### Comparative Example 1

The preparation process was the same as that in Example 3 except that ammonium bicarbonate was not added to the functional coating slurry.

### Comparative Example 2

The preparation process was the same as that in Example 4 except that ammonium bicarbonate was not added to the functional coating slurry.

### Comparative Example 3

Ammonium bicarbonate and PVDF at a mass ratio of 200:1 were dissolved and dispersed in NMP to form a functional coating slurry having a solid content of 20.1%. A coating machine was used to transfer the slurry to the surface of an aluminum foil, and then the coating was dried at 30°C to form a current collector having a functional coating layer. The functional coating slurry was applied to both sides of the foil. After the coating was dried, the areal density of ammonium bicarbonate was 100g/m², and the areal density of PVDF was 0.5g/m².

### Comparative Example 4

The preparation process was the same as that in Example 7 except that ammonium carbonate was not added to the functional coating slurry.

The current collectors prepared in the above Examples and Comparative Examples 1-4 were used to prepare lithium ion batteries according to Table 1. The batteries were prepared as follows:
(I) Preparation of positive electrode sheet: NCM523 as a positive electrode active material was mixed with carbon black as an electrically conductive agent and polyvinylidene fluoride (PVDF) as a binder at a mass ratio of 97.2:1.5:1.3, added into NMP as an organic solvent, and stirred at a high speed to form a uniform dispersion having a solid content of 70%. After the high-speed stirring was completed, the dispersion was defoamed in the stirring tank under negative pressure to obtain a positive electrode slurry suitable for coating. The resulting positive electrode slurry was applied to a current collector with a transfer coating machine. After drying, cold pressing and slitting, a positive electrode sheet in a desired shape was made. When a functional coating layer having a gas-generating compound was used, the drying temperature selected was: 120°C for ammonium bicarbonate, 170°C for ammonium carbonate, 210°C for ammonium bioxalate, and 210°C for ammonium oxalate. The areal density of the coating remaining on the electrode sheet after drying amounted to 400g/m². In the cold pressing process, the compact density of the area coated with the positive electrode active material was controlled at 3.45g/cm³.
(II) Preparation of negative electrode sheet: Artificial graphite was mixed with carbon black as an electrically conductive agent, styrene-butadiene rubber (SBR), and CMC-Na at a mass ratio of 96.5:1.2:1.4:0.9, added into deionized water, and stirred at a high speed to form a uniform dispersion having a solid content of 50%. After the high-speed stirring was completed, the dispersion was defoamed in the stirring tank under negative pressure to obtain a negative electrode slurry suitable for coating. The resulting negative electrode slurry was applied to a current collector with a transfer coating machine. After drying, cold pressing and slitting, a negative electrode sheet in a desired shape was made. When a functional coating layer having a gas-generating compound was used, the drying temperature selected was: 120°C for ammonium bicarbonate, 170°C for ammonium carbonate, 210°C for ammonium bioxalate, and 210°C for ammonium oxalate. The areal density of the coating remaining on the electrode sheet after drying amounted to 245g/m². In the cold pressing process, the compact density of the area coated with the negative electrode active material was controlled at 1.65g/cm³.
(III) Preparation of lithium ion battery: A positive electrode sheet and a negative electrode sheet were disposed on two sides of a 9µm thick PE separator respectively, and rolled up to form a roll core. The uncoated area was connected to a tab by ultrasonic welding. The roll core was wrapped with an aluminum-plastic film, and the edge was sealed with an opening reserved for filling electrolyte. To make an electrolyte, to a mixed solvent of EC:EMC:DEC = 3:5:2 (mass ratio) were added 11wt% of LiPF₆ based on the total mass of the electrolyte, 1wt% (based on the total mass of the electrolyte) of vinylene carbonate and 2wt% (based on the total mass of the electrolyte) of ethylene sulfate (DTD) as a lithium salt and additives respectively. The electrolyte was infused from the reserved opening into the soft package of the aluminum plastic film wrapping the roll core. A lithium ion battery was obtained by further processes of vacuum packaging, standing and forming.

### Comparative Example 5

In Comparative Example 5, an aluminum foil was used as a positive electrode current collector, and a copper foil was used as a negative electrode current collector to prepare a lithium ion battery according to the following process:
(I) Preparation of positive electrode sheet: A positive electrode active material NCM523 was mixed with carbon black as an electrically conductive agent and polyvinylidene fluoride (PVDF) as a binder at a mass ratio of 97.2:1.5:1.3, added into NMP as an organic solvent, and stirred at a high speed to form a uniform dispersion having a solid content of 70%. To this dispersion was added ammonium bicarbonate powder at a mass ratio of 5 (ammonium bicarbonate): 100 (positive electrode active material NCM523 + electrically conductive agent carbon black + polyvinylidene fluoride). After the high-speed stirring was completed, the dispersion was defoamed in the stirring tank under negative pressure to obtain a positive electrode slurry suitable for coating. The resulting positive electrode slurry was applied to an aluminum foil with a transfer coating machine. After drying, cold pressing and slitting, a positive electrode sheet in a desired shape was made. The temperature selected for the drying process was 120°C. The areal density of the coating remaining on the electrode sheet after drying amounted to 400g/m². In the cold pressing process, the compact density of the area coated with the positive electrode active material was controlled at 3.45g/cm³.
(II) Preparation of negative electrode sheet: Artificial graphite was mixed with carbon black as an electrically conductive agent, styrene-butadiene rubber (SBR), and CMC-Na at a mass ratio of 96.5:1.2:1.4:0.9, added into deionized water, and stirred at a high speed to form a uniform dispersion having a solid content of 50%. After the high-speed stirring was completed, the dispersion was defoamed in the stirring tank under negative pressure to obtain a negative electrode slurry suitable for coating. The resulting negative electrode slurry was applied to a copper foil with a transfer coating machine. After drying, cold pressing and slitting, a negative electrode sheet in a desired shape was made. The areal density of the coating remaining on the electrode sheet after drying amounted to 245g/m². In the cold pressing process, the compact density of the area coated with the negative electrode active material was controlled at 1.65g/cm³.
(III) Preparation of lithium ion battery: A positive electrode sheet and a negative electrode sheet were disposed on two sides of a 9µm thick PE separator respectively, and rolled up to form a roll core. The uncoated area was connected to a tab by ultrasonic welding. The roll core was wrapped with an aluminum-plastic film, and the edge was sealed with an opening reserved for filling electrolyte. To make an electrolyte, to a mixed solvent of EC:EMC:DEC = 3:5:2 (mass ratio) were added 11wt% of LiPF₆ based on the total mass of the electrolyte, 1wt% (based on the total mass of the electrolyte) of vinylene carbonate and 2wt% (based on the total mass of the electrolyte) of DTD as a lithium salt and additives respectively. The electrolyte was infused from the reserved opening into the soft package of the aluminum plastic film wrapping the roll core. A lithium ion battery of Comparative Example 5 was obtained by further processes of vacuum packaging, standing and forming.

Relevant performance tests were performed on the lithium ion batteries prepared using the current collectors of the Examples and Comparative Examples. The results are shown in Table 1. Test methods for the batteries:
(1) Rate test: A battery was charged and discharged at a rate of 1C (i.e. the numerical value of the rated capacity of the battery in ampere-hour was set as the current value) and a rate of 3C with a charge/discharge device, and the battery capacities Capic and Cap_{3C} during the discharge process were recorded. 3C capacity retention rate was R_{3C}=Cap_{3C}/Cap_{1C}.
(2) Lithium plating test: The battery was charged and discharged 10 times at 3C with the charge/discharge device, and then the battery was disassembled to observe the surface of the negative electrode sheet. If no obvious grayish white color was observed, the result was regarded as no lithium plating; if there were some discrete grayish white spots, the result was regarded as slight lithium plating; and there were stretches of grayish white regions, the result was regarded as lithium plating.

**Table 1. Performance test data of lithium ion batteries prepared using the current collectors in the Examples and Comparative Examples**

| Group No. | Positive electrode current collector | Negative electrode current collector | R_{3c} | Lithium plating test |
|---|---|---|---|---|
| 1 | Example 1 | Copper foil | 86.1% | Slight lithium plating |
| 2 | Aluminum foil | Example 2 | 91.5% | No lithium plating |
| 3 | Example 3 | Copper foil | 88.4% | No lithium plating |
| 4 | Example 3 | Example 4 | 92.4% | No lithium plating |
| 5 | Example 3 | Example 5 | 90.3% | No lithium plating |
| 6 | Example 6 | Example 4 | 92.7% | No lithium plating |
| 7 | Example 7 | Example 4 | 91.6% | No lithium plating |
| 8 | Example 8 | Example 4 | 92.2% | No lithium plating |
| 9 | Example 9 | Example 4 | 92.1% | No lithium plating |
| 10 | Aluminum foil | Copper foil | 81.1% | Lithium plating |
| 11 | Comparative Example 1 | Copper foil | 80.4% | Lithium plating |
| 12 | Aluminum foil | Comparative Example 2 | 80.2% | Lithium plating |
| 13 | Comparative Example 3 | Copper foil | 77.4% | Lithium plating |
| 14 | Comparative Example 4 | Copper foil | 81.8% | Lithium plating |
| Comparative Example 5 | Aluminum foil | Copper foil | 84.7% | Slight lithium plating |

The current collectors described in the present disclosure were used in Groups 1-9. It can be seen that the batteries obtained exhibit higher 3C capacity retention rates and better lithium plating behavior.

As it can be seen from a comparison of Groups 1, 2 with Group 10, no matter used in a positive electrode or in a negative electrode, the current collector with pores formed therein can provide a battery with better kinetic performance.

As it can be seen from a comparison of Group 1 with Group 3, the addition of a binder to the functional coating layer provides a better effect. The reason is that the addition of the binder can improve the process performance of the functional coating slurry and help the gas-generating compound to generate pores uniformly during drying the electrode sheet.

In Group 4, a current collector having a pore-forming functional coating layer is used in each of the positive and negative electrodes. The kinetic performances of the positive and negative electrodes are improved at the same time and can match each other, thereby providing better kinetic performance.

As it can be seen from a comparison of Group 4 with Group 5, the pore-forming effect tends to become better with an increase in the amount of the gas-generating compound added. However, as it can be seen from a comparison of Group 13 with Group 3, when the addition of the pore-forming agent (gas-generating compound) exceeds the preferred range according to the present disclosure, too many bubbles are generated and lead to uneven coating of the active material on the electrode sheet, which in turn significantly reduces the performance of the battery.

As it can be seen from a comparison between Groups 10, 11 and 12, when a binder is used alone on the current collector in a positive or negative electrode, no significant improvement of the kinetic performance can be achieved.

As it can be seen from a comparison of Group 10 with Group 14, if there is no gas-generating compound in the functional coating layer, the combination of a binder and an electrically conductive agent is of no help to the kinetic performance of the battery.

As it can be seen from a comparison of Group 1 with Group 10 and Comparative Example 5, direct addition of a gas-generating compound to a positive electrode slurry is conducive to the kinetic performance of the battery, but the effect is inferior to that achieved by adding the gas-generating compound to the functional coating layer on the surface of the current collector.

Additionally, as it is discovered by comparing Group 4 with Group 6 in the tests, although a higher amount of the gas-generating compound on the positive electrode current collector does bring some improvement in the performances of the battery, the degree of the improvement is small. Moreover, because more ammonia gas is generated by the decomposition of the pore-forming agent, the inner wall of the drying equipment and the operators will face more serious threats. Thus, the preferred amount of the pore-forming agent to be added according to the present disclosure is set in a range of lower levels.

Specific embodiments according to the present disclosure have been described above. It should be appreciated that the present disclosure is not limited to the above specific embodiments. Those skilled in the art can make various changes or modifications within the scope defined by the claims, and the substantive matter of the present disclosure is not affected. Where there is no conflict, the Examples and the features in the Examples in the present disclosure can be combined with each other freely.

## Claims

1. A current collector having a pore-forming functional coating layer, comprising an electrically conductive substrate layer and a functional coating layer applied on at least one surface of the substrate layer, wherein the functional coating layer comprises a gas-generating compound having a decomposition temperature of 250°C or less and capable of producing gas.

2. The current collector having a pore-forming functional coating layer according to claim 1, wherein the gas-generating compound decomposes to form bubbles during drying a positive electrode slurry or negative electrode slurry applied on the current collector having a pore-forming functional coating layer, thereby building through holes extending from bottom to top through an active material coating layer formed by drying the positive electrode slurry or negative electrode slurry.

3. The current collector having a pore-forming functional coating layer according to claim 1, wherein the gas-generating compound having a decomposition temperature of 250°C or less and capable of generating gas includes one or more of ammonium bicarbonate, ammonium carbonate, ammonium oxalate, and ammonium bioxalate.

4. The current collector having a pore-forming functional coating layer according to claim 1, wherein the functional coating layer is free of a positive electrode active material and a negative electrode active material.

5. The current collector having a pore-forming functional coating layer according to claim 1, wherein in the functional coating layer, a coating amount D of the gas-generating compound per unit area of the current collector satisfies: 0<D≤60g/m², preferably 0<D≤35g/m².

6. The current collector having a pore-forming functional coating layer according to claim 1, wherein in the functional coating layer, a coating amount D of the gas-generating compound per unit area of the current collector satisfies: 10≤D≤35g/m².

7. The current collector having a pore-forming functional coating layer according to claim 1, wherein in the functional coating layer, a coating amount D of the gas-generating compound per unit area of the current collector satisfies: 20≤D≤35g/m².

8. The current collector having a pore-forming functional coating layer according to claim 1, wherein the electrically conductive substrate layer comprises a copper foil, an aluminum foil, or a polymer foil with a metal plating layer adhered to a surface thereof.

9. The current collector having a pore-forming functional coating layer according to claim 1, wherein the functional coating layer further comprises one or more selected from the group consisting of an electrically conductive agent and a binder.

10. The current collector having a pore-forming functional coating layer according to claim 1, wherein the functional coating layer consists of a gas-generating compound and optionally one or more selected from the group consisting of an electrically conductive agent and a binder.

11. The current collector having a pore-forming functional coating layer according to claim 9 or 10, wherein the electrically conductive agent includes one or more of activated carbon, carbon black, graphite, carbon nanotubes, and carbon fibers; and the polymer binder includes one or more of polyvinylidene fluoride, polymethyl acrylate, styrene-butadiene rubber, sodium carboxymethyl cellulose, lithium carboxymethyl cellulose, polyvinyl alcohol, and polyurethane.

12. The current collector having a pore-forming functional coating layer according to claim 9 or 10, wherein in the functional coating layer, the coating amount D1 of the electrically conductive agent per unit area of the current collector satisfies: 0<D1≤2g/m²; and the coating amount D2 of the binder per unit area of the current collector satisfies: 0<D2≤2g/m².

13. An electrode sheet for a battery, wherein the electrode sheet is prepared using the current collector having a pore-forming functional coating layer according to any one of claims 1-12.

14. A method for preparing the electrode sheet for a battery according to claim 13, wherein the method includes the following steps:
(1) applying a positive electrode slurry or negative electrode slurry to a surface of the functional coating layer of the current collector having a pore-forming functional coating layer;
(2) drying the current collector coated with the positive electrode slurry or negative electrode slurry such that the gas-generating compound in the functional coating layer decomposes to form bubbles during the drying.

15. A lithium ion battery comprising the electrode sheet for a battery according to claim 13.
